# EUROPEAN PATENT APPLICATION

(11) **EP 4 570 838 A1**
(43) Date of publication of application: **18.06.2025**
(21) Application number: 23852639.6
(22) Date of filing: 10.08.2023
(51) Int. Cl.: C08F 261/08, C08F 214/26

(54) **MODIFIED POLYTETRAFLUOROETHYLENE**

(30) Priority: 10.08.2022 JP 2022127919
(71) Applicant: DAIKIN INDUSTRIES, LTD., Osaka-shi, Osaka 530-0001 (JP)
(72) Inventor: SATO, Hiroyuki, Osaka-Shi, Osaka 530-0001 (JP); ICHIKAWA, Kenji, Osaka-Shi, Osaka 530-0001 (JP); KATO, Taketo, Osaka-Shi, Osaka 530-0001 (JP); YAMANAKA, Taku, Osaka-Shi, Osaka 530-0001 (JP); YAMAMOTO, Emi, Osaka-Shi, Osaka 530-0001 (JP)
(74) Representative: Hoffmann Eitle
(86) International application number: PCT/JP2023/029344
(87) International publication number: WO 2024/034677

(57) **Abstract**

The disclosure provides a modified polytetrafluoroethylene having a low extrusion pressure despite having a high tensile strength at break. Provided is a modified polytetrafluoroethylene including: a tetrafluoroethylene unit; and a chlorotrifluoroethylene unit, the chlorotrifluoroethylene unit being contained in an amount of 1.0% by mass or less in all polymerized units, the modified polytetrafluoroethylene being expandable.

## Description

### TECHNICAL FIELD

The disclosure relates to modified polytetrafluoroethylenes.

### BACKGROUND ART

When polytetrafluoroethylene is molded and highly expanded in a non-sintered state, a porous polytetrafluoroethylene film can be obtained. This porous film allows water vapor and other gases to pass through but does not allow water droplets to pass through due to the strong water repellency of polytetrafluoroethylene. Utilizing this unique property, polytetrafluoroethylene is applied to clothing and separation membranes, for example.

Patent Literature 1 discloses a modified tetrafluoroethylene polymer obtained by a predetermined production method using chlorotrifluoroethylene as a modifier for the purpose of improving the paste extrudability.

Patent Literatures 2 to 4 disclose tetrafluoroethylene homopolymers and modified polytetrafluoroethylenes including units based on perfluoro(propyl vinyl ether) and hexafluoropropylene. Both of them are for use in expansion applications.

### CITATION LIST

### - Patent Literature

Patent Literature 1: JP S51-36291 A
Patent Literature 2: JP 2000-143707 A
Patent Literature 3: WO 2007/046345
Patent Literature 4: WO 2010/113950

### SUMMARY OF INVENTION

### - Technical Problem

The disclosure aims to provide a modified polytetrafluoroethylene having a low extrusion pressure despite having a high tensile strength at break.

### - Solution to Problem

The disclosure (1) relates to a modified polytetrafluoroethylene including: a tetrafluoroethylene unit; and a chlorotrifluoroethylene unit, the chlorotrifluoroethylene unit being contained in an amount of 1.0% by mass or less in all polymerized units, the modified polytetrafluoroethylene being expandable.

The disclosure (2) relates to the modified polytetrafluoroethylene according to the disclosure (1), wherein the modified polytetrafluoroethylene has a tensile strength at break of 20.0 N or higher.

The disclosure (3) relates to the modified polytetrafluoroethylene according to the disclosure (1) or (2), wherein the modified polytetrafluoroethylene has an extrusion pressure of 5 MPa or higher.

The disclosure (4) relates to the modified polytetrafluoroethylene according to any one of the disclosures (1) to (3), wherein the modified polytetrafluoroethylene has an extrusion pressure of 50 MPa or lower.

The disclosure (5) relates to the modified polytetrafluoroethylene according to any one of the disclosures (1) to (4), wherein the modified polytetrafluoroethylene has a strength ratio represented by "tensile strength at break/extrusion pressure" of higher than 1.90 N/MPa.

The disclosure (6) relates to the modified polytetrafluoroethylene according to any one of the disclosures (1) to (5), wherein the modified polytetrafluoroethylene is in the form of powder.

The disclosure (7) relates to the modified polytetrafluoroethylene according to any one of the disclosures (1) to (6), wherein the modified polytetrafluoroethylene is in the form of fine powder.

### - Advantageous Effects of Invention

The disclosure can provide a modified polytetrafluoroethylene having a low extrusion pressure despite having a high tensile strength at break.

### DESCRIPTION OF EMBODIMENTS

Polytetrafluoroethylene (PTFE) when modified tends to have a smaller primary particle size, which tends to result in a higher extrusion pressure. In general, PTFE has a higher tensile strength at break at a higher extrusion pressure. However, the resulting paste extrudate tends to be harder, reducing the moldability of the extrudate. Since hard paste extrudates may become non-uniform in post-processing and may break during processing, such as during expansion, the extrusion pressure is desirably low.

As a result of intensive studies, contrary to the technical common knowledge, PTFE having a low extrusion pressure despite having a high tensile strength at break is found to be obtainable as an expandable polymer using chlorotrifluoroethylene as a modifying monomer by controlling the polymerization conditions.

The disclosure will be specifically described hereinbelow.

The disclosure provides a modified PTFE including a tetrafluoroethylene (TFE) unit and a chlorotrifluoroethylene (CTFE) unit, the CTFE unit being contained in an amount of 1.0% by mass or less in all polymerized units, the modified PTFE being expandable.

The modified PTFE of the disclosure, having the above configuration, has a low extrusion pressure and excellent moldability despite having a high tensile strength at break.

CTFE has a structure similar to TFE and the crystalline structure of PTFE is not easily collapsed, which presumably prevents or suppresses a rise in extrusion pressure.

The modified PTFE includes a TFE unit (polymerized unit based on TFE) and a CTFE unit (polymerized unit based on CTFE), and the amount of the CTFE unit is 1.0% by mass or less in all polymerized units.

The amount of the TFE unit in the modified PTFE may be 99.0% by mass or more.

The modified PTFE may further include a polymerized unit based on a modifying monomer different from TFE and CTFE (different modifying monomer unit) or consist of the TFE unit and the CTFE unit. Preferably, the modified PTFE consists of the TFE unit and the CTFE unit.

Examples of the different modifying monomer include: fluorine-containing olefins such as hexafluoropropylene; fluoro(alkyl vinyl ethers) having a C1-C5, particularly C1-C3 alkyl group; fluorinated cyclic monomers such as fluorodioxole; perfluoroalkyl ethylenes; ω-hydroperfluoroolefins.

The amount of the different modifying monomer unit is preferably less than 1.0% by mass, more preferably 0.1% by mass or less, in all polymerized units.

The total amount of the CTFE unit and the different modifying monomer unit is preferably 1.0% by mass or less in all polymerized units.

The amount of the CTFE unit in all polymerized units is 1.0% by mass or less. In order to further lower the extrusion pressure and further increase the tensile strength at break, the amount is preferably 0.50% by mass or less, more preferably 0.30% by mass or less, still more preferably 0.20% by mass or less, further preferably 0.10% by mass or less, further preferably 0.08% by mass or less, in all polymerized units.

The amount of the CTFE unit in all polymerized units may be 0.0001% by mass or more or may be 0.001% by mass or more.

The CTFE unit herein means a moiety that is part of the molecular structure of a modified PTFE and is derived from CTFE.

The amounts of the above polymerized units can be calculated by any appropriate combination of NMR, FT-IR, elemental analysis, and X-ray fluorescence analysis in accordance with the types of the monomers.

The modified PTFE of the disclosure is expandable. A conventional CTFE-modified PTFE aimed at improving the paste extrudability, disclosed in Patent Literature 1, does not have a sufficiently high molecular weight and therefore is not expandable.

Whether or not being "expandable" herein is determined based on the following standard.

A beading obtained by the later-described paste extrusion is heated at 230°C for 30 minutes, whereby the lubricant is removed from the beading. The beading (extrudate) is cut to an appropriate length and the resulting sample is clamped at each end with a gap between the clamps of 2.0 inches (51 mm), followed by heating to 300°C in an air-circulating furnace. The clamps are then moved apart at a desired speed (stretching speed) until the separation distance corresponds to the desired degree of stretching (total degree of stretching). The stretching test is performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 1000%/sec and the total degree of stretching is 2400%. When no breakage occurs by the completion of the stretching, the beading is considered expandable.

In the production method, the modified PTFE of the disclosure preferably does not break by the completion of the stretching in the stretching test performed under the conditions of the stretching speed of 100%/sec and the total degree of stretching of 2400%.

The modified PTFE of the disclosure preferably has a tensile strength at break of 20.0 N or higher, more preferably 25.0 N or higher, still more preferably 30.0 N or higher, further preferably 32.0 N or higher, further preferably 35.0 N or higher. The higher the tensile strength at break, the better. Still, the tensile strength at break may be 100.0 N or lower, 80.0 N or lower, or 50.0 N or lower.

The tensile strength at break is a value obtained by the following method.

An expanded beading (article produced by stretching a beading) obtained in the expansion test performed at a stretching speed of 100%/sec is clamped between movable jaws with a gauge length of 5.0 cm to be fixed, and subjected to a tensile test at 25°C at a rate of 300 mm/min. The strength at break is measured as the tensile strength at break.

The modified PTFE of the disclosure has an extrusion pressure of preferably 50.0 MPa or lower, more preferably 40.0 MPa or lower, still more preferably 30.0 MPa or lower, further preferably 25.0 MPa or lower, further preferably 23.0 MPa or lower, further preferably 21.0 MPa or lower, particularly preferably 20.0 MPa or lower. The extrusion pressure may be 5.0 MPa or higher, 10.0 MPa or higher, 12.0 MPa or higher, 15.0 MPa or higher, or 17.0 MPa or higher.

The extrusion pressure is a value obtained by the following method.

To 100 g of a modified PTFE powder is added 21.7 g of lubricant (trade name: Isopar H (registered trademark), ExxonMobil Corp.), followed by mixing at room temperature for three minutes, whereby a PTFE fine powder mixture is obtained. Next, the resulting PTFE fine powder mixture is left to stand for at least one hour at room temperature (25°C) before extrusion, and paste-extruded through an orifice (diameter: 2.5 mm, land length: 11 mm, introduction angle: 30°) at room temperature at a reduction ratio (a ratio of the die inlet cross-sectional area to the die outlet cross-sectional area) of 100:1, whereby uniform beadings (extrudates) are obtained. The extrusion speed, i.e., the ram speed is set to 20 inches/min (51 cm/min). The load at which the pressure is in equilibrium in the paste extrusion is measured, and the obtained value is divided by the cylinder cross-sectional area used in the paste extrusion. The resulting value is defined as the extrusion pressure (MPa).

The modified PTFE of the disclosure has a strength ratio represented by "tensile strength at break (N)/extrusion pressure (MPa)" of preferably higher than 1.90 N/MPa, more preferably 1.95 N/MPa or higher, still more preferably 2.00 N/MPa or higher, further preferably 2.05 N/MPa or higher, particularly preferably 2.10 N/MPa or higher. The higher the strength ratio, the better. Still, the strength ratio may be 5.00 N/MPa or lower or 4.00 N/MPa or lower.

The higher the strength ratio, the higher the tensile strength at break and the lower the extrusion pressure.

The tensile strength at break and the extrusion pressure are each a value obtained by the above corresponding method.

In order to achieve excellent expandability, the modified PTFE of the disclosure has a standard specific gravity (SSG) of more preferably 2.180 or less, still more preferably 2.170 or less, particularly preferably 2.160 or less.

The standard specific gravity is also preferably 2.130 or more.

The standard specific gravity is measured by the water displacement method in conformity with ASTM D792 using a sample molded in conformity with ASTM D4895.

The modified PTFE of the disclosure commonly has non-melt secondary processibility. The non-melt secondary processibility refers to a property of a polymer with which the melt flow rate is non-measurable at a temperature higher than the melting point in conformity with ASTM D1238 and D2116, in other words, a property with which the polymer does not easily flow even within a melting point range.

In the case where the modified PTFE of the disclosure has no history of being heated to a temperature equal to or higher than 300°C, preferably, the modified PTFE has at least one endothermic peak in a range of 333°C to 347°C on a heat-of-fusion curve obtained by increasing the temperature at a rate of 10°C/min using a differential scanning calorimeter (DSC), and has an enthalpy of fusion of 62 mJ/mg or higher at 290°C to 350°C calculated from the heat-of-fusion curve.

The modified PTFE of the disclosure can be produced by, for example, a production method including a step of emulsion-polymerizing TFE and CTFE (and a different modifying monomer, if needed).

The emulsion polymerization can be performed, for example, in an aqueous medium in the presence of a fluorine-containing anionic surfactant and a polymerization initiator.

The emulsion polymerization may be performed by, for example, charging a polymerization reactor with an aqueous medium, the fluorine-containing anionic surfactant, a monomer, and optionally other additives, stirring the contents in the reactor, maintaining the reactor at a predetermined polymerization temperature, and then adding a predetermined amount of a polymerization initiator to start the polymerization reaction. After the polymerization reaction starts, the monomer, the polymerization initiator, a chain transfer agent, the surfactant, and the like may be added in accordance with the purposes.

In order to easily achieve the above-mentioned physical properties, the concentration of CTFE in the gas in the reactor at the time of starting polymerization (when adding an initiator) is preferably set to 0.001 mol% or higher, more preferably 0.01 mol% or higher. The CTFE concentration is also preferably 3.0 mol% or lower, more preferably 1.0 mol% or lower. The modifying monomer concentration may be maintained thereafter until the end of the polymerization reaction, or depressurization may be performed during the polymerization reaction. In order to achieve excellent expandability, CTFE is preferably fed all at once before the start of polymerization. Still, a portion thereof may be added continuously or intermittently after the start of polymerization.

The polymerization initiator may be any initiator capable of generating radicals within the polymerization temperature range, and any known oil-soluble and/or water-soluble polymerization initiator may be used. Further, the initiator may be combined with a reducing agent, for example, into the form of a redox agent to start polymerization. The concentration of the polymerization initiator is appropriately determined in accordance with the type of the monomer, the molecular weight of the target modified PTFE, and the reaction rate.

The polymerization initiator used may be an oil-soluble radical polymerization initiator or a water-soluble radical polymerization initiator.

The oil-soluble radical polymerization initiator may be a known oil-soluble peroxide. Typical examples thereof include dialkyl peroxycarbonates such as diisopropyl peroxydicarbonate and di-sec-butyl peroxydicarbonate, peroxy esters such as t-butyl peroxyisobutyrate and t-butyl peroxypivalate, dialkyl peroxides such as di-t-butyl peroxide, as well as di(perfluoroacyl) or di(fluorochloroacyl) peroxides such as di(ω-hydro-dodecafluoroheptanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotriacontafluorodocosanoyl)peroxide.

The water-soluble radical polymerization initiator may be a known water-soluble peroxide. Examples thereof include ammonium salts, potassium salts, and sodium salts of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

The water-soluble radical polymerization initiator may be added in any amount. For example, it may be added in an amount that does not significantly decrease the polymerization rate (e.g., concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the amount of the polymerization initiator added is preferably 1 ppm or more, more preferably 10 ppm or more, still more preferably 50 ppm or more in the aqueous medium. The amount of the polymerization initiator added is preferably 100000 ppm or less, more preferably 10000 ppm or less, still more preferably 5000 ppm or less.

In order to easily achieve the physical properties described above, the amount of the polymerization initiator added is preferably an amount equivalent to 0.1 ppm or more, more preferably an amount equivalent to 1.0 ppm or more, while it is preferably an amount equivalent to 100 ppm or less, more preferably an amount equivalent to 10 ppm or less in the aqueous medium.

For example, in the case of the polymerization at a low temperature of 30°C or lower, a polymerization initiator used is preferably a redox initiator that is a combination of an oxidizing agent and a reducing agent. Examples of the oxidizing agent include a persulfate, an organic peroxide, potassium permanganate, manganese triacetate, ammonium cerium nitrate, and a bromate. Examples of the reducing agent include a sulfite, a bisulfite, a bromate, a diimine, and oxalic acid. Examples of the persulfate include ammonium persulfate and potassium persulfate. Examples of the sulfite include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

The redox initiator is particularly preferably a combination of an oxidizing agent in the form of a salt and a reducing agent in the form of a salt.

For example, the oxidizing agent in the form of a salt more preferably includes at least one selected from the group consisting of persulfates, permanganates, cerium(IV) salts, and bromates, still more preferably a permanganate, particularly preferably potassium permanganate.

The reducing agent in the form of a salt more preferably includes at least one selected from the group consisting of oxalates, malonates, succinates, glutarates, and bromates, still more preferably an oxalate, particularly preferably ammonium oxalate.

Specifically, the redox initiator preferably includes at least one selected from the group consisting of potassium permanganate/oxalic acid, potassium permanganate/ammonium oxalate, potassium bromate/ammonium sulfite, manganese triacetate/ammonium oxalate, and ammonium cerium nitrate/ammonium oxalate, more preferably at least one selected from the group consisting of potassium permanganate/oxalic acid, potassium permanganate/ammonium oxalate, potassium bromate/ammonium sulfite, and ammonium cerium nitrate/ammonium oxalate, still more preferably potassium permanganate/oxalic acid.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

In use of a redox initiator as a polymerization initiator, the amount of the oxidizing agent added is preferably 5 ppm or more, more preferably 10 ppm or more, while preferably 10000 ppm or less, more preferably 1000 ppm or less in the aqueous medium. The amount of the reducing agent added is preferably 5 ppm or more, more preferably 10 ppm or more, while preferably 10000 ppm or less, more preferably 1000 ppm or less in the aqueous medium.

In order to easily achieve a modified PTFE suitable for expansion applications, the amount of the oxidizing agent added is preferably 0.1 ppm or more, more preferably 1.0 ppm or more, while preferably 100 ppm or less, more preferably 10 ppm or less in the aqueous medium. The amount of the reducing agent added is preferably 0.1 ppm or more, more preferably 1.0 ppm or more, while preferably 100 ppm or less, more preferably 10 ppm or less in the aqueous medium.

In use of a redox initiator in the emulsion polymerization, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

In order to easily achieve various physical properties described above, preferred examples of the polymerization initiator include a water-soluble radical polymerization initiator and a redox initiator.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, additives such as a nucleating agent, a chain transfer agent, a buffer, a pH adjuster, a stabilizing aid, a dispersion stabilizer, a radical scavenger, or a decomposer of a polymerization initiator may be used as needed.

In order to adjust the particle size, a nucleating agent is preferably added in the emulsion polymerization. The nucleating agent is preferably added before starting the polymerization reaction.

The nucleating agent may be a known one. The nucleating agent preferably includes at least one selected from the group consisting of fluoropolyethers, nonionic surfactants, and chain transfer agents, more preferably a nonionic surfactant.

The fluoropolyether may be, for example, perfluoropolyether (PFPE) acid or its salt. The perfluoropolyether (PFPE) acid or its salt may have any chain structure in which oxygen atoms in the main chain of the molecule are separated by saturated fluorocarbon groups containing 1 to 3 carbon atoms. Also, two or more types of fluorocarbon groups may be present in the molecule. A typical structure has a repeating unit represented by any of the following formulas:

(-CFCF₃-CF₂-O-)ₙ,

(-CF₂-CF₂-CF₂-O-)ₙ,

(-CF₂-CF₂-O-)ₙ-(-CF₂-O-)ₘ, and

(-CF₂-CFCF₃-O-)ₙ-(-CF₂-O-)ₘ.

These structures are disclosed by Kasai in J. Appl. Polymer Sci. 57, 797 (1995). As disclosed in this literature, the PFPE acid or its salt may have a carboxylic acid group or its salt at one end or each end. The PFPE acid or its salt may also have a sulfonic acid or phosphonic acid group or its salt at one end or at each end. Moreover, the PFPE acid or its salt may have a different group at each end. In the case of monofunctional PFPE, the other end of the molecule is usually perfluorinated but may have a hydrogen or chlorine atom. The PFPE acid or its salt contains at least two ether oxygens, preferably at least four ether oxygens, still more preferably at least six ether oxygens. Preferably, at least one of the fluorocarbon groups separating the ether oxygens, more preferably at least two of such fluorocarbon groups contain two or three carbon atoms. Further preferably, at least 50% of the fluorocarbon groups separating the ether oxygens contain two or three carbon atoms. Preferably, the PFPE acid or its salt contains a total of at least 15 carbon atoms, and, for example, a preferred minimum value of n or n + m in the repeating unit structure is at least 5. Two or more PFPE acids or their salts having an acid group at one end or at each end may be used in the production method of the disclosure. The PFPE acid or its salt preferably has a number average molecular weight of less than 6000 g/mol.

In order to further increase the molecular weight of the modified PTFE and improve the expandability, a radical scavenger or a decomposer of a polymerization initiator is preferably added in the emulsion polymerization. The radical scavenger or the decomposer of a polymerization initiator is added after the start of the polymerization reaction, preferably before 10% by mass or more, preferably 20% by mass or more of the total TFE to be consumed in the polymerization reaction is polymerized, while preferably before 50% by mass or less, preferably 40% by mass or less of the total TFE to be consumed in the polymerization reaction is polymerized. The radical scavenger or the decomposer of a polymerization initiator is preferably added after later-described depressurization and repressurization, if performed.

The radical scavenger used is a compound that has no reinitiation ability after addition or chain transfer to free radicals in the polymerization system. Specifically, used is a compound having a function of readily causing a chain transfer reaction with a primary radical or propagating radical and then generating a stable radical that does not react with a monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or greater, still more preferably 1.0 or greater, further preferably 5.0 or greater, particularly preferably 10 or greater.

The radical scavenger preferably includes, for example, at least one selected from the group consisting of aromatic hydroxy compounds, aromatic amines, N,N-diethylhydroxylamine, quinone compounds, terpenes, thiocyanates, and cupric chloride (CuCl₂).

Examples of aromatic hydroxy compounds include unsubstituted phenols, polyhydric phenols, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphthoresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to moderately reduce the standard specific gravity, the amount of the radical scavenger added is preferably an amount equivalent to 3% to 500% (on a molar basis) of the polymerization initiator concentration. The lower limit is more preferably 10% (on a molar basis), still more preferably 15% (on a molar basis). The upper limit is more preferably 400% (on a molar basis), still more preferably 300% (on a molar basis).

The decomposer of a polymerization initiator may be any compound that can decompose the polymerization initiator used, and preferably includes at least one selected from the group consisting of, for example, sulfites, bisulfites, bromates, diimines, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

In order to moderately reduce the standard specific gravity, the amount of the decomposer added is preferably an amount equivalent to 3% to 500% (on a molar basis) of the initiator concentration. The lower limit is more preferably 10% (on a molar basis), still more preferably 15% (on a molar basis). The upper limit is more preferably 400% (on a molar basis), still more preferably 300% (on a molar basis).

In the emulsion polymerization, the polymerization temperature and the polymerization pressure are appropriately determined in accordance with the type of the monomer used, the molecular weight of the target modified PTFE, and the reaction rate. The polymerization temperature is typically 5°C to 150°C. The polymerization temperature is preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In the emulsion polymerization, depressurization is preferably not performed until the polymerization is completed after the modifying monomer is introduced into the polymerization container. This allows the modifying monomer to remain in the system until the end of polymerization, leading to a still higher tensile strength at break of the modified PTFE to be obtained.

The production method may include a step of coagulating the aqueous dispersion to obtain a wet powder of the modified PTFE. The coagulation can be performed by a known method.

The production method may include a step of drying the wet powder. The drying is typically performed by means such as vacuum, high frequency, or hot air, while the wet powder is kept in a state where it does not flow so much, preferably in a stationary state. Friction between powders, especially at high temperatures, generally has an unfavorable effect on fine powder PTFE. This is because particles made of PTFE of this type are easily fibrillated even by a small shearing force to lose their original stable particle structure. In order to further increase the tensile strength at break, the drying may be performed at 10°C or higher, preferably at 100°C or higher, more preferably at 150°C or higher, still more preferably at 170°C or higher, further preferably at 190°C or higher, further preferably at 210°C or higher, further preferably at 230°C or higher, particularly preferably at 250°C or higher. In order to further lower the extrusion pressure, the drying may be performed at 300°C or lower, preferably at 250°C or lower, more preferably at 230°C or lower, still more preferably at 210°C or lower, further preferably at 190°C or lower, particularly preferably at 170°C or lower. In order to further increase the strength ratio, the drying temperature is preferably appropriately adjusted within this temperature range.

The modified PTFE of the disclosure is preferably in the form of powder, more preferably in the form of fine powder.

The modified PTFE of the disclosure can also be provided in the form of an aqueous dispersion. An aqueous dispersion containing particles of the modified PTFE of the disclosure is also a preferred embodiment of the disclosure.

The modified PTFE of the disclosure has an average primary particle size of preferably 500 nm or smaller, more preferably 350 nm or smaller, still more preferably 300 nm or smaller, particularly preferably 280 nm or smaller, while preferably 100 nm or greater, more preferably 150 nm or greater, still more preferably 170 nm or greater, particularly preferably 200 nm or greater.

The average primary particle size is measured by the following method.

A modified PTFE aqueous dispersion is diluted with water to a solid content concentration of 0.15% by mass. The transmittance of 550-nm light relative to the unit length of the resulting diluted latex is measured. The Feret diameters in a transmission electron microscopic image are measured and the number-based length average particle size is determined therefrom. A calibration curve is obtained from these values. Using this calibration curve, the number average particle size is determined from the measured transmittance of 550-nm light incident on each sample, and defined as the average primary particle size.

The modified PTFE of the disclosure may have an average aspect ratio of 2.0 or lower, preferably 1.8 or lower, more preferably 1.7 or lower, still more preferably 1.6 or lower, further preferably 1.5 or lower, further preferably 1.4 or lower, even more preferably 1.3 or lower, particularly preferably 1.2 or lower, most preferably 1.1 or lower. The average aspect ratio may be 1.0 or higher.

The average aspect ratio is determined as follows. Specifically, a fluororesin powder or an aqueous dispersion of the fluororesin diluted to have a solid content concentration of about 1% by mass is observed using a scanning electron microscope (SEM) and 200 or more particles randomly selected are imaged. The ratio of the major and minor axes of each particle is then obtained and the average thereof is defined as the average aspect ratio.

The modified PTFE of the disclosure has an average secondary particle size of 100 µm or greater, more preferably 200 µm or greater, still more preferably 300 µm or greater, while preferably 2000 µm or smaller, more preferably 1000 µm or smaller, still more preferably 800 µm or smaller, particularly preferably 700 µm or smaller.

The average secondary particle size is measured in conformity with JIS K 6891.

The modified PTFE of the disclosure is particularly useful as a raw material of expanded articles. An expanded article including the modified PTFE of the disclosure is also a preferred embodiment of the disclosure.

The expanded article can be obtained by expanding the modified PTFE of the disclosure.

The expanded article is also preferably in the form of a film, a tube, fibers, or rods.

The expanded article in the form of a film (expanded film or porous film) can be formed by expansion by a known PTFE expansion method.

Preferably, a sheet-shaped or rod-shaped paste extrudate is roll-expanded in an extruding direction, whereby a uniaxially expanded film can be obtained.

Further expansion in a transverse direction using a tenter, for example, can provide a biaxially expanded film.

Prebaking treatment is also preferably performed before expansion.

The expanded article can be formed as a porous article having a high porosity, and can be suitably used as a filter material for a variety of microfiltration membranes such as air filters and chemical filters and a support member for polymer electrolyte membranes.

The expanded article is also useful as a material of products used in the textile field, the medical treatment field, the electrochemical field, the sealant field, the air filter field, the ventilation/internal pressure adjustment field, the liquid filter field, and the consumer goods field.

The following provides examples of specific applications.

### - Electrochemical field

Examples of the applications in this field include prepregs for dielectric materials, EMI-shielding materials, and heat conductive materials. More specifically, examples thereof include printed circuit boards, electromagnetic interference shielding materials, insulating heat conductive materials, and insulating materials.

### - Sealant field

Examples of the applications in this field include gaskets, packings, pump diaphrams, pump tubes, and sealants for aircraft.

### - Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), absorbent-attached filters (for HDD embedment), absorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of the applications in this field include materials for freeze drying such as containers for freeze drying, ventilation materials for automobiles for electronic circuits and lamps, applications relating to containers such as container caps, protective ventilation for electronic devices, including small devices such as tablet terminals and mobile phone terminals, and ventilation for medical treatment.

### - Liquid filter field

Examples of the applications in this field include liquid filters for semiconductors (for production of semiconductors), hydrophilic PTFE filters (for production of semiconductors), filters for chemicals (for liquid chemical treatment), filters for pure water production lines (for production of pure water), and back-washing liquid filters (for treatment of industrial drainage).

### - Consumer goods field

Examples of the applications in this field include clothes, cable guides (movable wires for motor bikes), clothes for motor cyclists, cast liners (medical supporters), filters for cleaners, bagpipes (musical instrument), cables (signal cables for guitars), and strings (for string instrument).

### - Textile field

Examples of the applications in this field include PTFE fibers (fiber materials), machine threads (textiles), weaving yarns (textiles), and ropes.

### - Medical treatment field

Examples of the applications in this field include implants (extending articles), artificial blood vessels, catheters, general surgical operations (tissue reinforcing materials), products for head and neck (dura mater alternatives), oral health (tissue regenerative medicine), and orthopedics (bandages).

The modified PTFE of the disclosure is also suitably used for various additives such as dustproof additives, anti-dripping agents, and binders for batteries, coating applications, and applications of impregnation of glass cloth.

An aqueous dispersion containing particles of the modified PTFE of the disclosure is usable in various applications including use as a surface coating agent for cooking utensils, use in production of impregnated articles such as roofing materials by impregnating glass fibers, carbon fibers, Kevlar (registered trademark) fibers, etc. with the aqueous dispersion, and use in formation of films by applying the aqueous dispersion to articles to be coated, followed by sintering in applications including high-frequency printed circuit boards, transfer belts, and packings.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

The physical properties were determined by the following methods.

### Average primary particle size

A modified PTFE aqueous dispersion was diluted with water to a solid content concentration of 0.15% by mass. The transmittance of 550-nm light relative to the unit length of the resulting diluted latex was measured. The Feret diameters in a transmission electron microscopic image were measured and the number-based length average particle size was determined therefrom. A calibration curve was obtained from these values. Using this calibration curve, the number average particle size was determined from the measured transmittance of 550-nm light incident on each sample, and defined as the average primary particle size.

### Polymer solid content

A modified PTFE aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid content.

### Amount of modifying monomer

A PTFE powder was press-molded into a thin-film disc and the thin-film disc was subjected to FT-IR measurement, so that infrared absorbances were obtained. The CTFE content was determined by multiplying the ratio (absorbance at 957 cm⁻¹)/(absorbance at 2360 cm⁻¹) by 0.58.

### Standard specific gravity (SSG)

The SSG was determined by the water displacement method in conformity with ASTM D792 using a sample molded in conformity with ASTM D4895.

### Endothermic peak temperature

The endothermic peak temperature is the temperature corresponding to the minimum point on a heat-of-fusion curve obtained by increasing the temperature of PTFE that has no history of being heated to a temperature of 300°C or higher at a temperature-increasing rate of 10°C/min using a differential scanning calorimeter (DSC).

### Extrusion pressure

To 100 g of a modified PTFE powder was added 21.7 g of lubricant (trade name: Isopar H (registered trademark), ExxonMobil Corp.), followed by mixing at room temperature for three minutes, whereby a PTFE fine powder mixture was obtained. Next, the resulting PTFE fine powder mixture was left to stand for at least one hour at room temperature (25°C) before extrusion, and paste-extruded through an orifice (diameter: 2.5 mm, land length: 11 mm, introduction angle: 30°) at room temperature at a reduction ratio of 100:1, whereby uniform beadings (extrudates) were obtained. The extrusion speed, i.e., the ram speed was set to 20 inches/min (51 cm/min). The load at which the pressure was in equilibrium in the paste extrusion was measured, and the obtained value was divided by the cylinder cross-sectional area used in the paste extrusion. The resulting value was defined as the extrusion pressure (MPa).

### Expansion test

A beading obtained by the above paste extrusion was heated at 230°C for 30 minutes, whereby the lubricant was removed from the beading. The beading (extrudate) was cut to an appropriate length and the resulting sample was clamped at each end with a gap between the clamps of 2.0 inches (51 mm), followed by heating to 300°C in an air-circulating furnace. The clamps were then moved apart at a desired speed (stretching speed) until the separation distance corresponded to the desired degree of stretching (total degree of stretching). The stretching test was performed in this manner. The stretching method is essentially in conformity with the method disclosed in US 4576869 B, except that the extrusion speed is different (51 cm/min, not 84 cm/min). The "degree of stretching" shows the increase in length attributable to expansion, and is typically expressed in relation to the original length. In the above production method, the stretching speed is 100%/sec and the total degree of stretching is 2400%.

### Tensile strength at break

An expanded beading (article produced by stretching a beading) obtained in the above expansion test was clamped between movable jaws with a gauge length of 5.0 cm to be fixed, and subjected to a tensile test at 25°C at a rate of 300 mm/min. The strength at break was measured as the tensile strength at break.

### Strength ratio

The strength ratio was determined by assigning the values to "tensile strength at break (N)/extrusion pressure (MPa)".

### Synthesis Example 1

A white solid A was obtained by the method disclosed in Synthesis Example 1 of WO 2021/045228.

### Example 1

A 6-L SUS reactor equipped with a stirrer was charged with 3600 g of deionized water, 180 g of paraffin wax, 5.4 g of the white solid A, and 26.5 mg of oxalic acid. Next, the contents of the reactor were heated to 70°C while being suctioned and the reactor was simultaneously purged with tetrafluoroethylene (TFE) to remove oxygen in the reactor, and the contents were stirred. To the reactor was injected 2.60 g of chlorotrifluoroethylene (CTFE) with TFE, followed by further addition of TFE to set the pressure to 2.70 MPaG. A potassium permanganate aqueous solution containing 3.4 mg of potassium permanganate dissolved in deionized water was continuously added to the reactor as an initiator. After the initiator was injected, the pressure dropped and start of polymerization was observed. TFE was added to the reactor so that the pressure was constant at 2.70 MPaG. When the amount of TFE fed reached 430 g, feeding of the potassium permanganate aqueous solution was stopped. When the amount of TFE fed reached 1660 g, feeding of TFE was stopped, stirring was stopped, and the reaction was terminated. Thereafter, the reactor was evacuated to return the pressure in the reactor to normal pressure, followed by nitrogen purge. The contents were taken out from the reactor and cooled. The paraffin wax was removed, whereby a PTFE aqueous dispersion was obtained. The solid content concentration of the resulting PTFE aqueous dispersion was 31.4% by mass, and the average primary particle size was 248 nm.

The PTFE aqueous dispersion obtained was diluted to a solid content concentration of 13% by mass. The dilution was stirred vigorously in a container equipped with a stirrer to be coagulated. The wet powder resulting from the coagulation was taken out and dried at 210°C for 18 hours, whereby a PTFE powder was obtained. Various physical properties of the resulting PTFE powder were measured. The results are shown in Table 1.

### Example 2

Polymerization was performed under the same conditions as those in Example 1, except that the amount of CTFE fed was set to 1.28 g, the amount of potassium permanganate fed was set to 3.87 mg, and the final amount of TFE fed was set to 1790 g, whereby a PTFE aqueous dispersion was obtained. The solid content concentration of the resulting PTFE aqueous dispersion was 33.0% by mass, and the average primary particle size was 263 nm.

A PTFE powder was obtained as in Example 1 using the resulting PTFE aqueous dispersion. Various physical properties of the resulting PTFE powder were measured. The results are shown in Table 1.

### Comparative Example 1

Polymerization was performed under the same conditions as those in Example 1, except that CTFE was not fed, the amount of succinic acid fed was set to 0.108 g, the amount of potassium permanganate fed was set to 3.5 mg, and the final amount of TFE fed was set to 1500 g, whereby a PTFE aqueous dispersion was obtained. The solid content concentration of the resulting PTFE aqueous dispersion was 29.5% by mass, and the average primary particle size was 380 nm.

A PTFE powder was obtained as in Example 1 using the resulting PTFE aqueous dispersion. Various physical properties of the resulting PTFE powder were measured. The results are shown in Table 1.

**[Table 1]**

| | Modifying monomer | | SSG | Endothermic peak temperature | Extrusion pressure | Tensile strength at break | Strength ratio |
|---|---|---|---|---|---|---|---|
| | Type | Amount (% by mass) | (-) | (°C) | (MPa) | (N) | (N/MPa) |
| Example 1 | CTFE | 0.100 | 2.150 | 344 | 18.8 | 37.4 | 1.99 |
| Example 2 | CTFE | 0.050 | 2.150 | 344 | 18.4 | 39.4 | 2.14 |
| Comparative Example 1 | - | - | 2.149 | 345 | 18.2 | 29.7 | 1.63 |

## Claims

1. A modified polytetrafluoroethylene comprising:
a tetrafluoroethylene unit; and
a chlorotrifluoroethylene unit,
the chlorotrifluoroethylene unit being contained in an amount of 1.0% by mass or less in all polymerized units,
the modified polytetrafluoroethylene being expandable.

2. The modified polytetrafluoroethylene according to claim 1,
wherein the modified polytetrafluoroethylene has a tensile strength at break of 20.0 N or higher.

3. The modified polytetrafluoroethylene according to claim 1 or **2,**
wherein the modified polytetrafluoroethylene has an extrusion pressure of 5 MPa or higher.

4. The modified polytetrafluoroethylene according to any one of claims 1 to **3,**
wherein the modified polytetrafluoroethylene has an extrusion pressure of 50 MPa or lower.

5. The modified polytetrafluoroethylene according to any one of claims 1 to **4,**
wherein the modified polytetrafluoroethylene has a strength ratio represented by "tensile strength at break/extrusion pressure" of higher than 1.90 N/MPa.

6. The modified polytetrafluoroethylene according to any one of claims 1 to **5,**
wherein the modified polytetrafluoroethylene is in the form of powder.

7. The modified polytetrafluoroethylene according to any one of claims 1 to 6,
wherein the modified polytetrafluoroethylene is in the form of fine powder.
